Europäisches Patentamt

European Patent Office

Office européen des brevets

(11) Publication number: **0 368 513**
**A2**

# EUROPEAN PATENT APPLICATION

(21) Application number: **89311076.7**

(51) Int. Cl.⁵: **B01D 65/08, F28F 13/00**

(22) Date of filing: **26.10.89**

(30) Priority: **05.11.88 GB 8825957**

(43) Date of publication of application:
**16.05.90 Bulletin 90/20**

(84) Designated Contracting States:
**BE CH DE FR GB IT LI NL SE**

(71) Applicant: **The British Petroleum Company p.l.c.**
**Britannic House Moor Lane**
**London EC2Y 9BU(GB)**

(72) Inventor: **Colman, Derek Alan The British Petroleum Co. p.l.c**
**Research Centre Chertsey Road**
**Sunbury-on-Thames**
**Middlesex TW16 7LN(GB)**
Inventor: **Mackley, Malcolm Robert**
**Univ. of Cambridge Dept of Chemical Enineering**
**Pembroke Street Cambridge CB2 3RA(GB)**

(74) Representative: **Dodding, Robert Anthony et al**
**BP INTERNATIONAL LIMITED Patents Division Chertsey Road**
**Sunbury-on-Thames Middlesex, TW16 7LN(GB)**

(54) **Mixing apparatus and method.**

(57) Apparatus and method for effecting mass or heat transfer between the bulk of a fluid and a surface boundary layer of the fluid at a transfer surface in which the fluid is passed in pulsatile flow through a conduit (30) having a transfer surface comprising at least a part of the surface of an array of cylinders (31) positioned transverse to the direction of fluid flow. The transfer surface may comprise a membrane for example a hollow fibre membrane.

*FIG.3*

EP 0 368 513 A2

# MIXING APPARATUS AND METHOD

The present invention relates to mixing apparatus and method and in particular to apparatus and a method for effecting mass or heat transfer between the bulk of a fluid and a surface boundary layer of the fluid.

Concentration polarisation due to poor mass or heat transfer between the bulk of a fluid and a surface boundary layer may adversely affect a variety of processes such as filtration, ultra-filtration, microfiltration, reverse osmosis, electrodialysis, electrolysis, heterogenous catalysis, dissolution, heat exchange pervaporation, gas separation,separations using liquid membranes and the like. Such processes take place at a transfer surface. A transfer surface is a surface at which mass or heat transfer may take place. Such transfer surfaces may be membranes, filters, electrodes, catalyst surfaces, heat exchange surfaces and the like.

Such processes may be effected in a conduit wherein the fluid is passed through the conduit and over the transfer surface such that mass or heat transfer takes place between the bulk of the fluid and a surface boundary layer of the fluid and thence between the boundary layer and the transfer surface.

It is usually desirable to have good mixing, that is mass or heat transfer, perpendicular to the transfer surface to reduce concentration polarisation without excessive mixing in the direction of the fluid flow, which can reduce a concentration or temperature gradient in the direction of the fluid flow. Furthermore, good mass transfer may help to reduce fouling in ultrafiltration processes, for example.

One way of inducing this perpendicular mixing is to create turbulent flow in the fluid using a high fluid flow rate over the transfer surface. This has the disadvantage that the nett transfer between the surface and the fluid per unit length of surface is low and fluid may have to be recycled. There are other ways of inducing mixing, for example, European patent application no. EP 0079040 relates to a filtration method in which the liquid flow is pulsed to induce mixing. United Kingdom patent application no. GB2188563A relates to a membrane layer having protrusions (e.g. studs and/or ribs) serving as flow disturbing means. United Kingdom patent application no. GB 2168907 relates to a membrane filtration method in which the fluid flow is pulsed and further in which the transfer surface is adapted to produce vortex mixing by machining grooves or furrows into it.

If the transfer surfaces are in the form of cylinders, for example hollow fibre membranes or heat exchange tubes, it may be difficult to manufacture such surfaces with baffles, grooves and the like. Also in use, it may be difficult to pulse the fluid along the cylinders, particularly if they are narrow.

Thus, according to the present invention there is provided apparatus for effecting mass or heat transfer between the bulk of a fluid and a surface boundary layer of the fluid at a transfer surface, the apparatus comprising a conduit having a transfer surface, means for passing fluid in pulsatile flow through the conduit and over the transfer surface, an array of cylinders within the conduit transverse to the direction of fluid flow, and the transfer surface comprising at least part of the surface of the array of cylinders.

According to the present invention there is also provided a method of effecting mass or heat transfer between the bulk of a fluid and a surface boundary layer of the fluid at a transfer surface, the method comprising passing the fluid in pulsatile flow through a conduit and over a transfer surface comprising at least part of the surface of an array of cylinders within the conduit transverse to the direction of the fluid flow.

Preferbly, the fluid flow and the cylinder positions are adjusted so that the cylinders induce vortex mixing in the fluid.

The conduit may have any suitable tranverse cross-section. The cross-section may be circular, square or rectangular. The conduit may be an annular conduit with fluid flow from the centre of the annulus to the outside or from the outside of the annulus to the centre, the cylinders being positioned along the annulus transverse to the direction of fluid flow.

The transfer surface may comprise all or part of the cylinders. The transfer surface may comprise a filter, membrane, (for example hollow fibre membrane), electrode, catalyst, heat exchanger or the like.

The cylinders may have a circular, oval or similar transverse cross-section. The cylinders may have a square, rectangular or other transverse cross-section with sharp edges.

The array comprises at least two cylinders. The cylinders may be arranged in an irregular pattern but preferably in a regular, repeating pattern. The cylinders may be arranged in a square, triangular or rectangular pitch but preferably the cylinders are arranged in a square or a triangular pitch. Preferably, the cylinders are spaced apart at distances, centre to centre, of at least one and a half times the cylinder transverse diameter. Preferably, the cylinders are spaced apart at distances, centre to centre, of not more than four times the cylinder transverse diameter. Most preferably, the cylinders are spaced apart at distances, centre to centre, of about twice the cylinder transverse diameter. For cylinders with non-circular transverse cross-sections the cylinder transverse diameter is taken as the equivalence circle area diameter which is the diameter of a circle of equivalent cross-sectional area to that of the cylinders. The cylinders may be perpendicular to the fluid flow. The cylinders may be skew to the fluid flow, having components both perpendicular and parallel to the fluid flow. All of the cylinders may be parallel to each other or not all of the cylinders may be parallel to each other. The cylinders may be arranged in rows of parallel cylinders, the rows being positioned such that cylinders in adjacent rows are at right angles to each other.

The pulsatile flow may be pulsed unidirectionally, that is to say the velocity of the fluid in the general direction of the fluid flow may vary periodically between a pre-determined maximum and a pre-determined minimum. Preferably, the pulsatile flow is oscillatory so that fluid flow reversal takes place; that is to say the velocity of the fluid in the general direction of the fluid flow rises and falls in a continuous manner and passes through a negative value, for example in a sinusoidal form, whilst still retaining an average flow greater than or equal to zero through the conduit. The oscillatory flow may be sinusoidal but other forms may be used.

Preferably, the oscillatory Reynolds number, OsRe is greater than the mean flow Reynolds number, Re and most preferably it is at least 3 to 4 times greater, so that the mean Reynolds number will have little effect on either mass/heat transfer or residence time. Therefore the net flow may be chosen to provide the required residence time without signficantly affecting the mass/heat transfer.

The pulsatile flow may be provided by continuously pumping the fluid through the conduit, for example by a centrifugal or gear pump and superimposing unidirectional pulses or reciprocating oscillations by use of suitable pumps, valves or other mechanisms. The pulsatile flow may be provided by a double piston pump.

The amplitude and frequency of the pulses and oscillations are preferably selected such that fluid flow reversal takes place.

The apparatus and method of the present invention may be used for membrane filtration such as ultrafiltration, microfiltration or reverse osmosis wherein the fluid comprises liquid with suspended particulate material, colloidal material or solute and the transfer surface comprises a membrane having pores of a suitable size to allow at least a part of the liquid to pass through the membrane and to be collected on the other side of the membrane whilst the particulate material, colloidal material or solute is retained within the conduit. Similarly, the invention may be used for filtration of solid/gas fluid or liquid/gas fluid.

The apparatus and method of the present invention may be used for pervaporation wherein a fluid comprising at least two liquids is passed in pulsatile flow through the conduit, the transfer surface comprising a membrane selectively permeable to at least one of the liquids which passes through to the other side of the membrane over which a gas or liquid is passed or to which a reduced pressure is applied.

The apparatus and method of the present invention may be used for such processes as osmosis, reverse osmosis, electrolysis electrodeposition, dissolution, electrodialysis, heterogenous reactions, heterogenous catalysis,and the like.

The apparatus and method of the present invention may be used for heat transfer between two fluids; one fluid inside the conduit and the other fluid inside the cylinders of the array and in thermal contact with the transfer membrane. In this embodiment the transfer surface should have good heat transfer characteristics but may not allow mass transfer.

The apparatus and method of the present invention may be used for both heat and mass transfer. In this embodiment, for example, some of the cylinders of the array may be used for mass transfer, for example pervaporation, and some of the cylinders may be used for heat transfer for example to control the temperature of the fluid.

It is envisaged that the apparatus and method of the present invention may be used for gas or liquid separation using liquid fluid membranes. In this embodiment the fluid in the conduit is a selective liquid membrane and is passed through the conduit in pulsatile flow. The nett average flow along the conduit may be zero. Gas or liquid but, preferably, gas to be separated is supplied to some of the transverse cylinders and separated gas (or liquid) is collected in the other transverse cylinders, the cylinders being formed of gas (or liquid) permeable membranes.

The apparatus and method of the present invention may be used in batch or continuous processes.

It is believed that the present invention may exhibit sharp residence time distributions.

The invention will now be described by way of example only and with reference to the accompanying drawings.

Figure 1 represents in schematic form the apparatus used for measuring the effect of a cylinder array, pulsatile flow and nett flow on the mass transfer coefficient.

Figure 2 shows, in longitudinal cross-section, three types of cylinder array in the conduit.

Figure 3 shows a conduit having an array of cylinders with square transverse cross-section such as might be used for filtration.

Figure 4 shows in graphical form the mass transfer coefficients which were measured in a straight conduit without cylinders with steady fluid flow.

Figure 5 shows in graphical form mass transfer coefficients at the surface of a cylinder which were measured in a conduit with an array of cylinders with steady fluid flow.

Figure 6 shows in graphical form the mass transfer coefficients which were measured in a conduit with an array of cylinders with pulsatile fluid flow.

Figures 7 to 11 show in graphical form the mass transfer coefficients at the surface of a cylinder which were measured in a conduit with square pitch, triangular pitch and rectangular pitch arrays of cylinders with pulsatile fluid flow.

Figures 12 and 13 show in graphical from the mass transfer coefficients for square pitch cylinder arrays in which alternate rows are at right angles and parallel respectively.

Figure 14 shows in schematic side elevation cross-section a cylinder array with alternate rows at right angles.

Figures 15 and 16 show the fluid flow paths which were observed in an apparatus and method according to the present invention.

To show the effect of vortex mixing on the mass transfer at the surface of a cylinder in a conduit the technique of measuring electrochemical limiting current was used. In this method the current flow to an electrode under limiting current conditions is proportional to the mass transfer. The reaction used in the method for the examples contained herein was the reduction of ferricyanide ion in potassium ferricyanide to ferrocyanide at the cathode

$$Fe(CN)_6{}^{3-} + e^- \rightleftharpoons Fe(CN)_6{}^{4-}$$

An electrolyte was prepared in distilled water as 0.005 molar potassium ferricyanide, 0.015 molar potassium ferrocyanide and 0.5 molar potassium hydroxide.

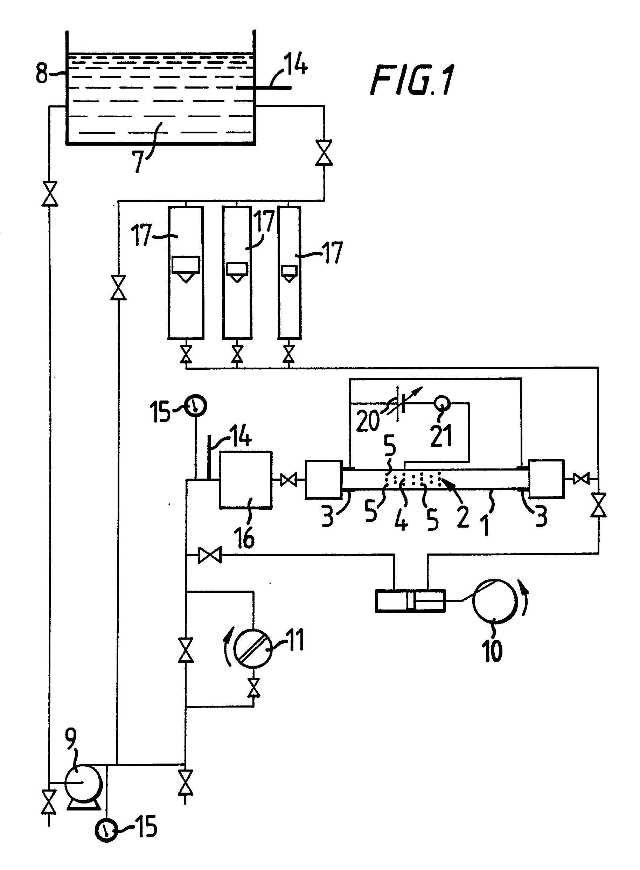

The apparatus used for the present experiments is shown in Figure 1.

In Figure 1, a conduit (1) was provided with an array (2) of cylinders. The conduit had a rectangular transverse cross-section 23.6mm wide and 16mm high. Nickel cylinders (5) of circular transverse cross-section and 2.4 mm diameter and 16 mm long were positioned transversely across the conduit perpendicular to the direction of fluid flow in an array of at least five rows of cylinders. One (4) of the cylinders in the centre of the array was connected to the electrical circuit (20,21) as a cathode. Nickel anodes (3) were provided upstream and downstream of the cathode (4). Fluid (7) could be pumped from a header tank (8) by a centrifugal pump (9) through the conduit (1) at constant velocity. A double piston pump (10) could be used to superimpose oscillations onto the fluid flow through the conduit (1). A rotating ball valve (11) was provided for optionally providing unidirectional pulsed fluid flow. The pressure of the fluid was measured by pressure gauges (15) and the flow rate was measured by an electromagnetic flow meter (16) and rotameters (17). The temperature of the fluid was measured by temperature probes (14). A variable voltage supply (20) provided voltage to the electrodes (3,4) and the current was measured by zero resistance ammeters (21).

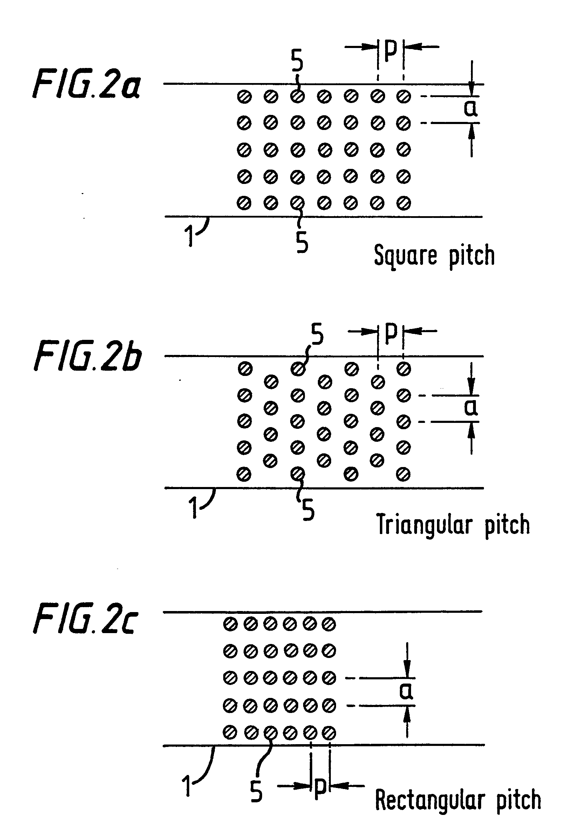

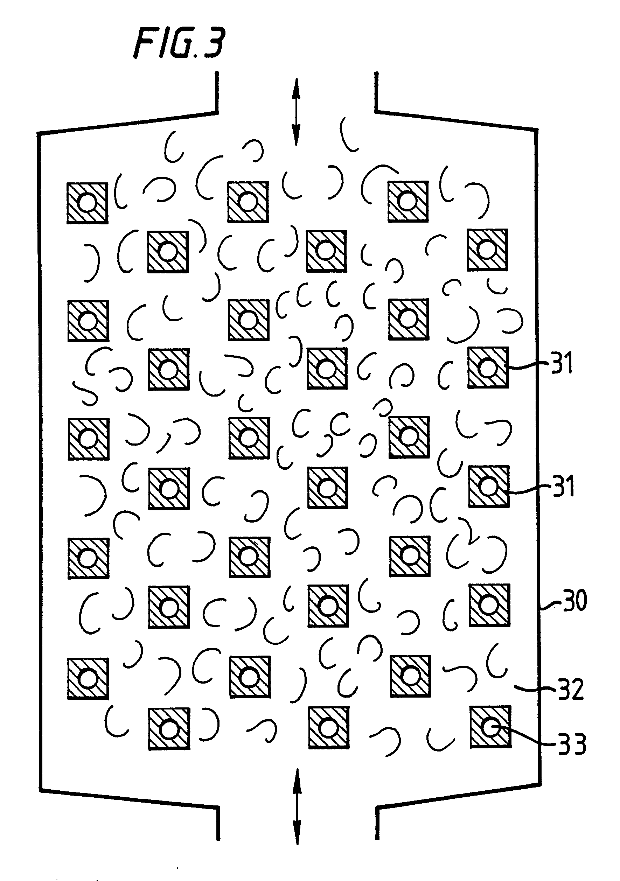

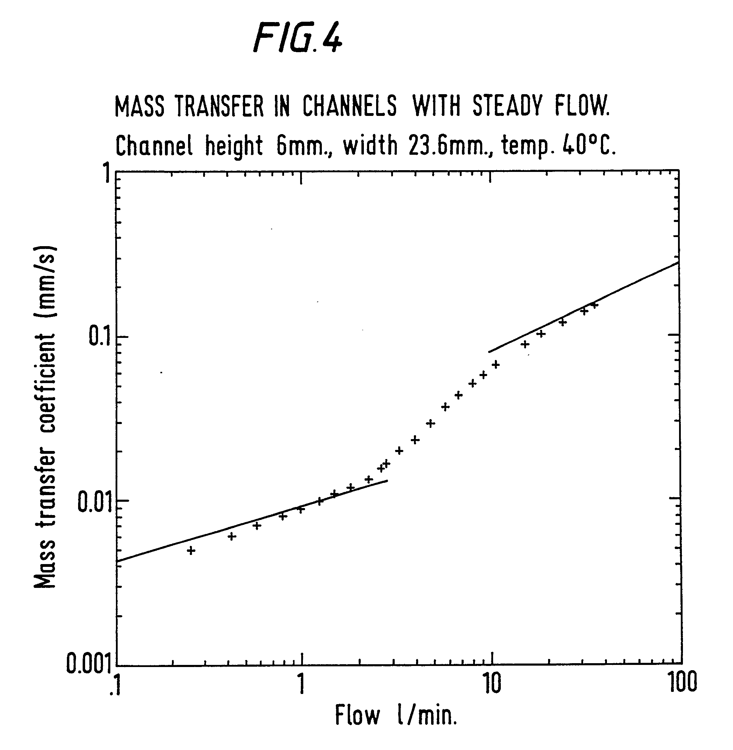

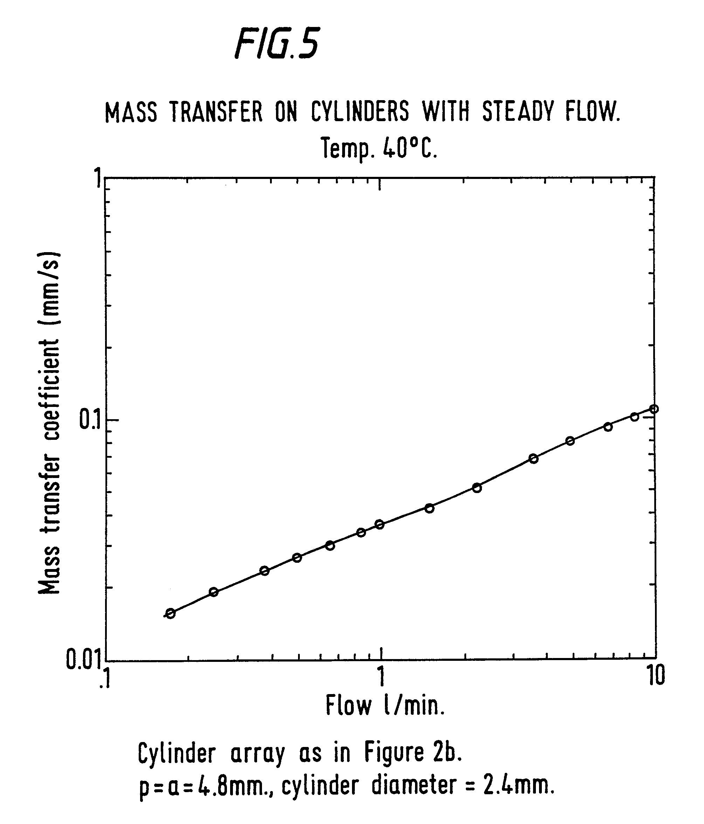

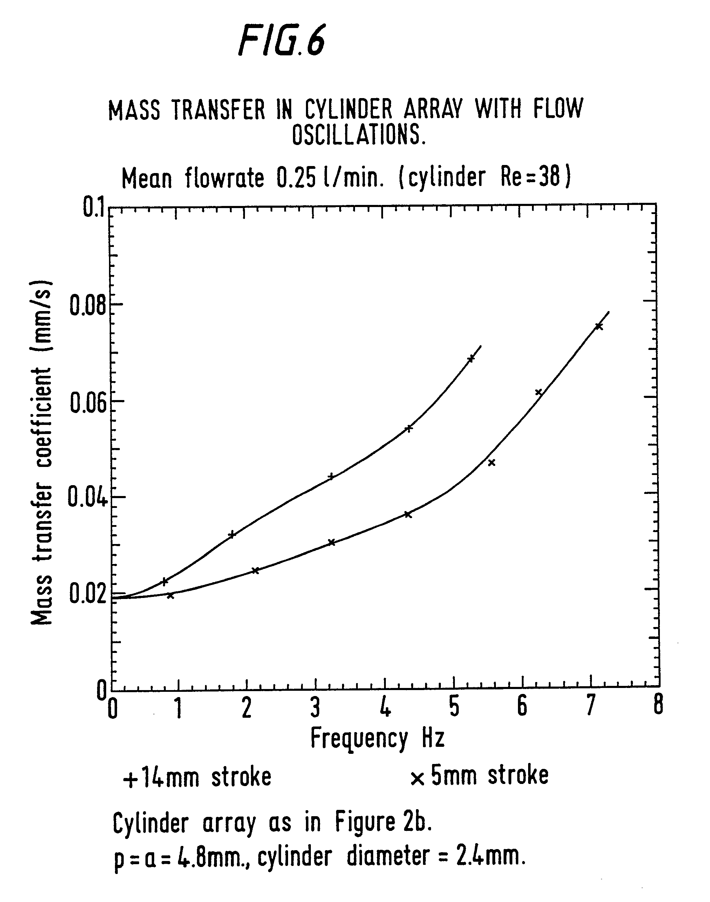

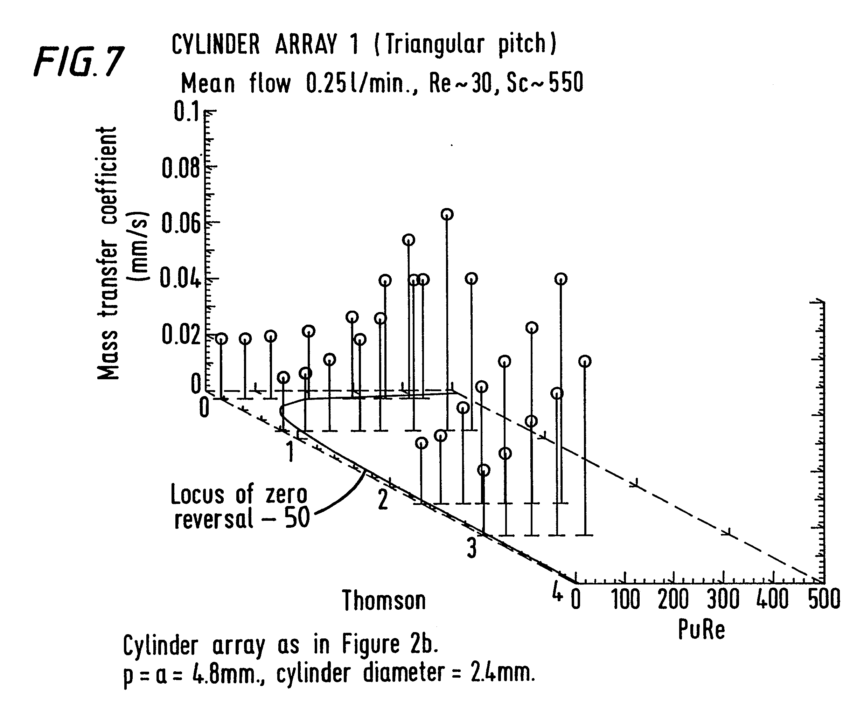

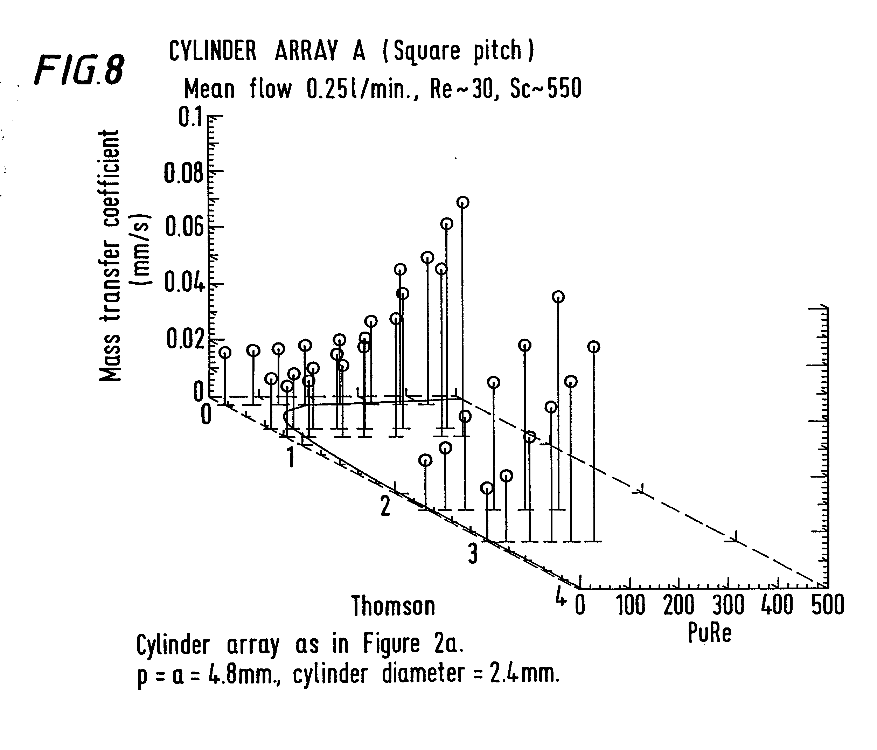

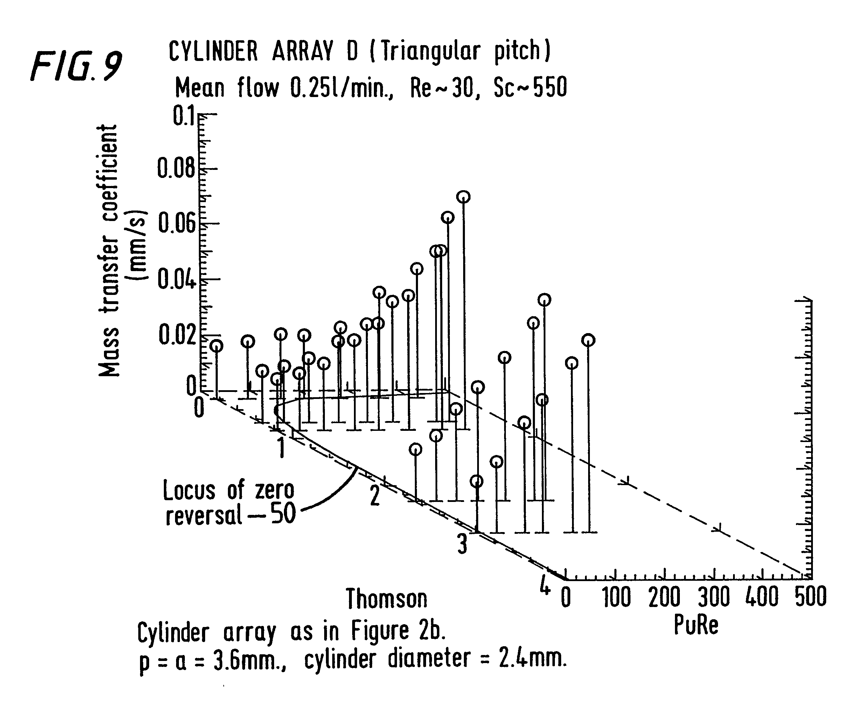

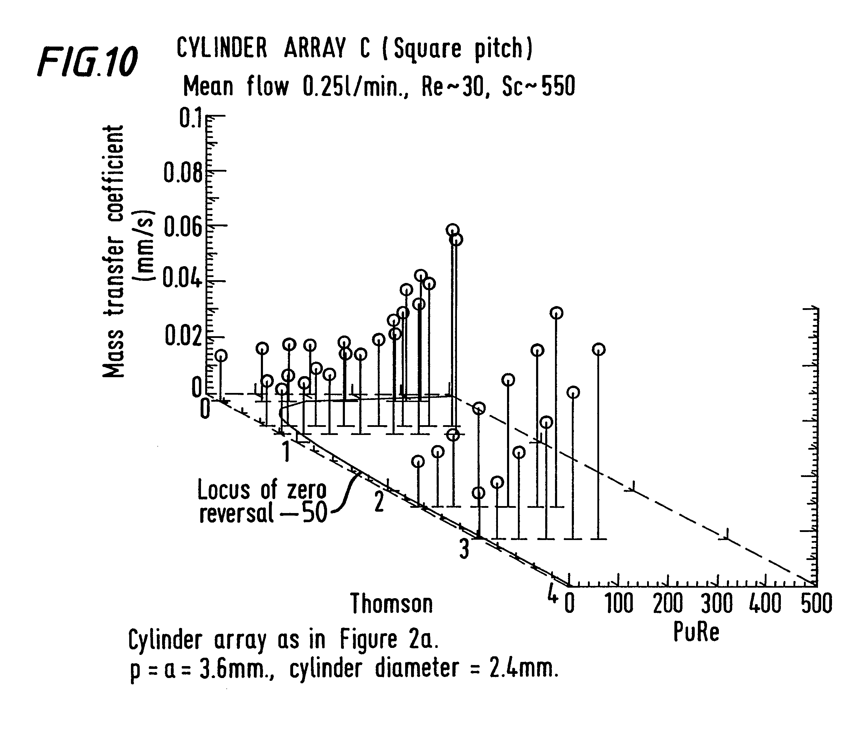

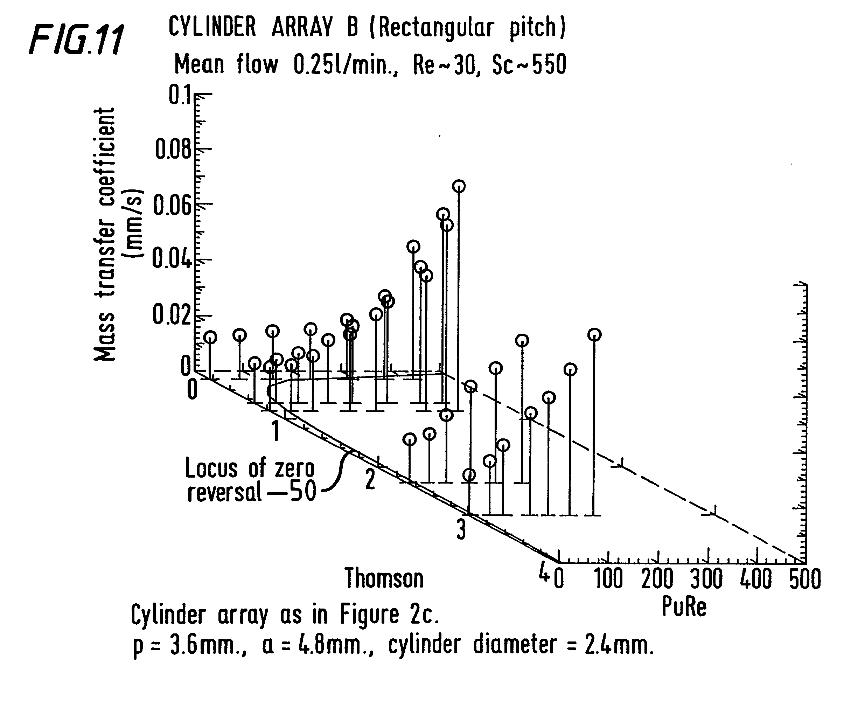

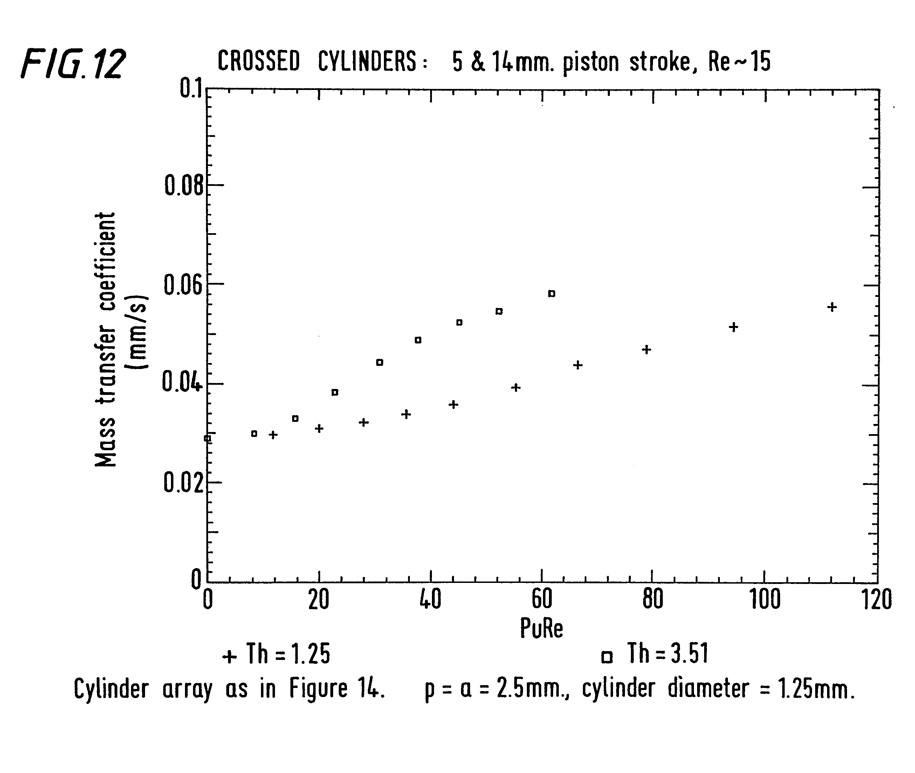

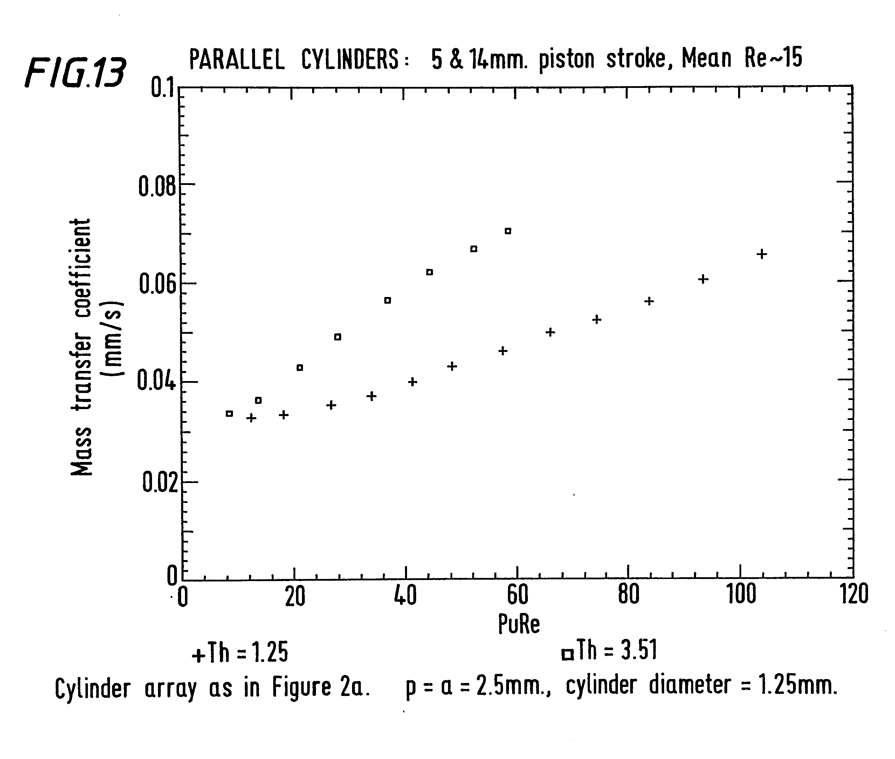

Figures 2a, 2b and 2c show three types of cylinder array used. In Figure 2a, 2b and 2c the longitudinal cross-section of the conduit (1) is shown with cylinders (5) which extend transversely across the conduit. The cylinders are 2.4 mm in diameter. In Figure 2a cylinders are shown in a square pitch pattern; the spacing (a) of the cylinders being equal to the distance (p) between the rows of cylinders. Equal cylinder spacings (a) and row spacings (p) of 4.8 mm and 3.6 mm (centre to centre) were used. In Figure 2b the cylinders are in a triangular pitch formed by staggered rows of cylinders; equal cylinder spacings (a) and row spacings (p) of 4.8 mm and 3.6 mm (centre to centre) were used. In Figure 2c the cylinders are shown in rectangular pitch pattern, the cylinder spacings (a) being 4.8 mm (centre to centre) in each row and the row spacings being 3.6 mm (centre to centre).

In use, the solution (7) of potassium ferricyanide, potassium ferrocyanide and potassium hydroxide was pumped through the conduit (1) at different flow rates with different configurations of cylinders and with different frequencies and amplitudes of pulses/oscillations.

The fluid properties of the solution (7) were essentially those of 0.5 molar potassium hydroxide in laboratory distilled water. In order to maintain a stable operating temperature ($40^\circ$C $\pm$ $1^\circ$C) the apparatus was operated continuously during the experiments.

Comparative Experiments

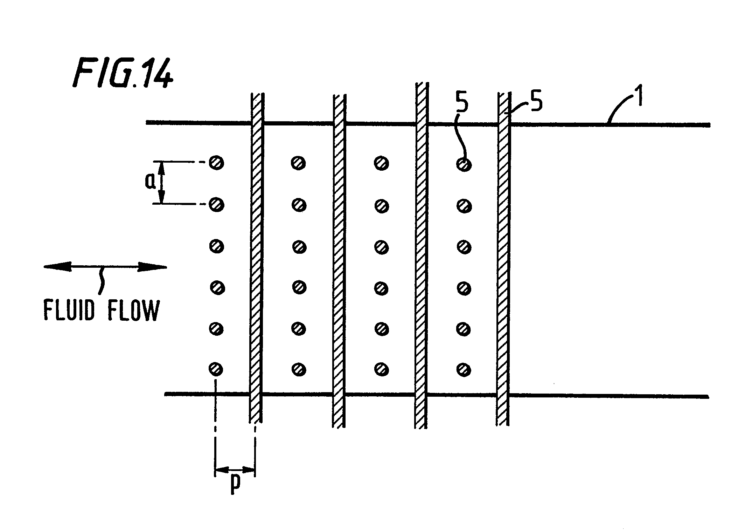

The mass transfer coefficients were measured using the apparatus shown in Figure 1, but for steady fluid flow in a conduit without cylinders, 6 mm high and the results are shown in Figure 4. The mass transfer coefficients at the surface of a cylinder in an array of cylinders with triangular pitch as in Figure 2b with cylinder spacings (a) and row spacings (p) of 4.8 mm centre to centre were measured using the apparatus shown in Figure 1, but with steady flow and the results are shown in Figure 5.

Examples According To The Present Invention

Mass transfer coefficients for a cylinder in a cylinder array with a triangular pitch as in Figure 2b with 2.4 mm diameter cylinders and cylinder spacings (a) and row spacings (p) of 4.8 mm centre to centre, were measured using the apparatus shown in Figure 1 for pulsatile fluid flow with a nett flow through the conduit of 0.25 l/min. The results are shown in Figure 6 for different frequencies and for stroke lengths of 5 mm and 14 mm for the double piston pump.

At the highest frequencies (6-8 Hz) the pulsatile flow with a nett average flow of 0.25 l/min had a mass transfer coefficient which was equivalent to a steady flow of about 4 l/min through the cylinder array or 10 l/min in a straight, conduit without cylinders.

Results for triangular and square pitch pitch arrays with cylinder diameters of 2.4 mm and cylinder spacings (a) and row spacings of 4.8 mm (centre to centre) as in Figures 2b and 2a are shown in three-dimensional graph form in Figures 7 and 8. Mass transfer is plotted against Thomson number (which is linear pulsatile amplitude/cylinder diameter) and against pulsatile Reynold's number (PuRe) which is defined as

$$\underline{2\,\pi\,\text{frequency (diameter of cylinder)}^2}.$$
$$\text{viscosity}$$

The mean Reynolds number, Re is defined as

$$\underline{\text{mean velocity x cylinder diameter}},$$
$$\text{viscosity}$$

the Schmidt number, Sc is defined as kinematic viscosity/diffusivity and the oscillatory Reynolds number, OsRe, is defined as Thomson number x PuRe. The results show the square pitch cylinder array to provide better mass transfer than the triangular pitch array. The locus of zero flow reversal (50) in Figures 7 to 11 is where the Oscillatory Reynolds number, OsRe equals the mean flow Reynolds number Re and the results show the increased mass transfer with OsRe greater than Re.

Further experiments were preformed using triangular pitch and square pitch arrays with cylinder diameters of 2.4 mm and cylinder spacings (a) and row spacings (p) of 3.6 mm (centre to centre). The results are shown in three-diamensional graph from in Figures 9 and 10 respectively. These results show that a cylinder spacing of twice the cylinder diameter is preferred over that of one and a half times the cylinder diameter.

Results for the rectangular pitch cylinder array as in Figure 2c with 2.4 mm cylinder diameter and row spacing (p) of 3.6 mm and cylinder spacing (a) of 4.8 mm are shown in three-diamensional graph form in Figure 11. These results show that square or triangular pitch arrays are preferred over rectangular pitch arrays.

Further experiments were performed using rows of cylinders (5) perpendicular to the direction of fluid flow in an array in a circular 24 mm diameter conduit in which rows were set so that the cylinders in adjacent rows were at right angles to one another, as shown in schematic side-elevation cross-section in Figure 14. Cylinder diameters of 1.25 mm were used. The cylinders were spaced apart from each other by 2.5 mm (centre to centre) and the rows were spaced apart by 2.5 mm (centre to centre). The same apparatus as in Figure 1 was used except that all of the cylinders were connected to the circuit as electrodes. Six rows each of ten cylinders were used in the arrays. The nett flow rate was 0.25 1/min (Re approximately 15). Stroke lengths of 5 mm and 14 mm for the double piston pump were used giving Thomson values of 1.25 and 3.51 respectively. The Schmidt number of the fluid was about 1500. The results are shown in Figure 12. Comparable experiments were performed with the rows of cylinders positioned with all the cylinders parallel to each other. The results for these experiments are shown in Figure 13.

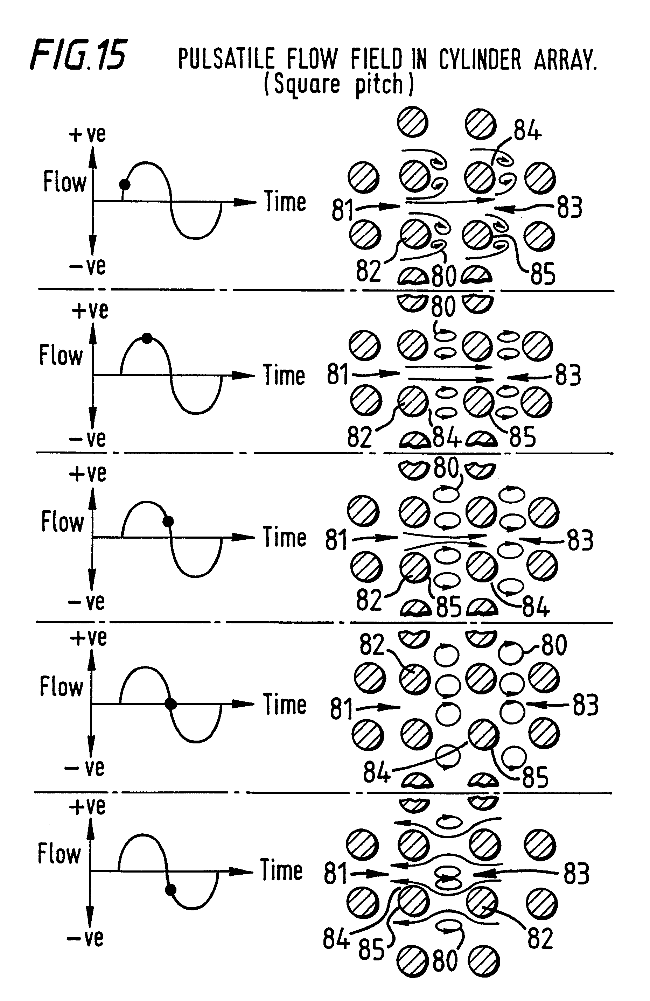

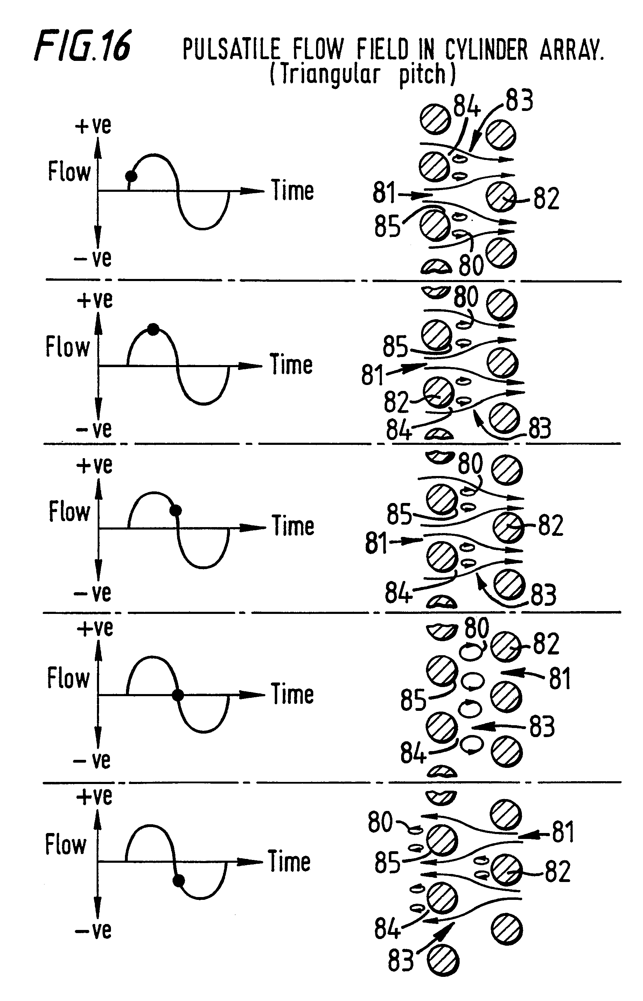

Figures 15 and 16 show schematically the flow paths which were observed in an oscillating fluid in a conduit (1) with cylinder arrays and which were photographed using the apparatus as shown in Figure 1 with dilution aqueous sodium choride solution at 25°C with a dispersion of reflective platelets of natural pearl essence called Mearlmaid AA (trade name).

In Figure 15 flow visualisations are shown schematically for five sequential stages of a flow oscillation with a square pitch cylinder array. The flow direction and magnitude is shown in graph form along side the observed flow pattern. Without wishing to be bound by any theory the flow patterns show vortices (80) created in the fluid (81) by the cylinders (82). These vortices are enlarged, moved and then destroyed by the action of the pulsatile flow, thereby mixing the fluid and effecting heat or mass transfer between the bulk (shown generally as 83) of the fluid (81) and the surface boundary layers (84) of the fluid at the cylinder transfer surfaces (85).

Figure 16 shows a similar flow visualisation to that in Figure 15 except that a triangular pitch array of cylinders was used.

Without wishing to be bound by any theory, these flow visualisations show that at flow reversal (zero flow) the vortices that have been created enlarge into the bulk of the fluid thereby mixing the fluid and effecting heat or mass transfer between the bulk of the fluid and the surface boundary layers of the fluid at the cylinder transfer surfaces.

Figure 3 shows a different conduit (30) to those in Figure 2,having an array of hollow cylinders (31) with square transverse cross-section such as might be used for filtration, the cylinders being formed of a semi-permeable membrane or filter material. In use, fluid (32) is passed in pulsatile flow along the conduit and filtrate (33) is collected in the hollow cylinders.

## Claims

1. Apparatus for effecting mass or heat transfer between the bulk of a fluid and a surface boundary layer of the fluid at a transfer surface, the apparatus comprising a conduit having a transfer surface, means for passing fluid in pulsatile flow through the conduit and over the transfer surface, an array of cylinders within the conduit transverse to the direction of fluid flow, and the transfer surface comprising at least part of the surface of the array of cylinders.

2. Apparatus according to claim 1 in which the cylinders are in a square pitch or triangular pitch array.

3. Apparatus according to claim 2 in which the distance between the cylinders, centre to centre, is greater than one and a half times the diameter of the cylinders and not greater than four times the diameter of the cylinders.

4. Apparatus according to claim 3 in which the distance between the cylinders, centre to centre, is twice the diameter of the cylinders.

5. Apparatus according to any one of the preceding claims in which the cylinders have a circular transverse cross-section.

6. Apparatus according to claim 5 in which the cylinders comprise hollow fibre membranes.

7. Apparatus according to claim 1 in which the cylinders have sharp edges.

8. Apparatus according to claim 7 in which the cylinders have a square transverse cross-section.

9. Apparatus according to any one of the preceding claims in which the cylinders are perpendicular to the direction of the fluid flow.

10. Apparatus according to any one of the preceding claims in which the cylinders are all parallel to each other.

11. Apparatus according to claim 9 in which the cylinders are in rows positioned so that the cylinders in adjacent rows are at right angles to one another.

12. Apparatus according to any one of the preceding claims comprising means for passing fluid through the conduit in oscillatory flow with fluid flow reversal.

13. Apparatus according to claim 1 in which the cylinders comprise a heat transfer surface.

14. Apparatus according to claim 1 in which at least one of the cylinders comprises a heat transfer surface and at least one of the cylinders comprises a membrane.

15. Method of effecting mass or heat transfer between the bulk of a fluid and a surface boundary layer of the fluid at a transfer surface, the method comprising passing the fluid in pulsatile flow through a conduit and over a transfer surface comprising at least part of the surface of an array of cylinders within the conduit transverse to the direction of fluid flow.

16. Method according to claim 15 in which the fluid flow and cylinder positions are adjusted so that the cylinders induce vortex mixing in the fluid.

FIG.1

*FIG.2a*

5    →|P|←

⊘ ⊘ ⊘ ⊘ ⊘ ⊘ ⊘ ----

⊘ ⊘ ⊘ ⊘ ⊘ ⊘ ⊘ ----      a

⊘ ⊘ ⊘ ⊘ ⊘ ⊘ ⊘

⊘ ⊘ ⊘ ⊘ ⊘ ⊘ ⊘

⊘ ⊘ ⊘ ⊘ ⊘ ⊘ ⊘

1        5

Square pitch

*FIG.2b*

5    →|P|←

⊘   ⊘   ⊘   ⊘

⊘ ⊘ ⊘ ⊘ ⊘ ⊘

⊘ ⊘ ⊘ ⊘ ⊘ ⊘ ----      a

⊘ ⊘ ⊘ ⊘ ⊘ ⊘ ----

⊘ ⊘ ⊘ ⊘ ⊘ ⊘

⊘   ⊘   ⊘   ⊘

1     5

Triangular pitch

*FIG.2c*

⊘⊘⊘⊘⊘⊘

⊘⊘⊘⊘⊘⊘

⊘⊘⊘⊘⊘⊘ --       ↑

⊘⊘⊘⊘⊘⊘ --       a

⊘⊘⊘⊘⊘⊘           ↓

1     5   →|P|←     Rectangular pitch

# FIG.3

FIG.4

MASS TRANSFER IN CHANNELS WITH STEADY FLOW.
Channel height 6mm., width 23.6mm., temp. 40°C.

# FIG.5

## MASS TRANSFER ON CYLINDERS WITH STEADY FLOW.
## Temp. 40°C.

Cylinder array as in Figure 2b.
p = a = 4.8mm., cylinder diameter = 2.4mm.

# FIG.6

## MASS TRANSFER IN CYLINDER ARRAY WITH FLOW OSCILLATIONS.

### Mean flowrate 0.25 l/min. (cylinder Re=38)

+14mm stroke          × 5mm stroke

Cylinder array as in Figure 2b.
p = a = 4.8mm., cylinder diameter = 2.4mm.

FIG.7

CYLINDER ARRAY 1 (Triangular pitch)
Mean flow 0.25 l/min., Re~30, Sc~550

Cylinder array as in Figure 2b.
p = a = 4.8mm., cylinder diameter = 2.4mm.

EP 0 368 513 A2

*FIG.8*

CYLINDER ARRAY A (Square pitch)
Mean flow 0.25 l/min., Re~30, Sc~550

Mass transfer coefficient (mm/s)

Thomson

PuRe

Cylinder array as in Figure 2a.
p = a = 4.8mm., cylinder diameter = 2.4mm.

EP 0 368 513 A2

FIG.9    CYLINDER ARRAY D (Triangular pitch)

Mean flow 0.25l/min., Re~30, Sc~550

Mass transfer coefficient (mm/s)

Locus of zero reversal—50

Thomson

Cylinder array as in Figure 2b.

$p = a = 3.6mm.$, cylinder diameter = 2.4mm.

PuRe

EP 0 368 513 A2

FIG.10  CYLINDER ARRAY C (Square pitch)
Mean flow 0.25l/min., Re~30, Sc~550

Cylinder array as in Figure 2a.
p = a = 3.6mm., cylinder diameter = 2.4mm.

EP 0 368 513 A2

FIG.11 CYLINDER ARRAY B (Rectangular pitch)
Mean flow 0.25l/min., Re~30, Sc~550

Mass transfer coefficient (mm/s)

Locus of zero reversal—50

Thomson

PuRe

Cylinder array as in Figure 2c.
p = 3.6mm., a = 4.8mm., cylinder diameter = 2.4mm.

EP 0 368 513 A2

FIG.12   CROSSED CYLINDERS:  5 & 14mm. piston stroke, Re~15

+ Th = 1.25          □ Th = 3.51

Cylinder array as in Figure 14.    p = a = 2.5mm., cylinder diameter = 1.25mm.

EP 0 368 513 A2

**FIG.13**

PARALLEL CYLINDERS: 5 & 14mm. piston stroke, Mean Re~15

+Th = 1.25          □Th = 3.51

Cylinder array as in Figure 2a.    p = a = 2.5mm., cylinder diameter = 1.25mm.

EP 0 368 513 A2

*FIG.14*

5   5    1

a

FLUID FLOW

p

EP 0 368 513 A2

**FIG.15**   PULSATILE FLOW FIELD IN CYLINDER ARRAY.
(Square pitch)

FIG.16 PULSATILE FLOW FIELD IN CYLINDER ARRAY.
(Triangular pitch)